# EUROPÄISCHE PATENTSCHRIFT

(11) **EP 0 790 145 B1**
(45) Veröffentlichungstag und Bekanntmachung des Hinweises auf die Patenterteilung: **17.04.2002**
(21) Anmeldenummer: 97100298.5
(22) Anmeldetag: 10.01.1997
(51) Int. Cl.: B60K 23/02

(54) **Betätigungseinrichtung für eine Kupplung eines automatisierten Getriebes eines Fahrzeuges**
Clutch control device for an automatic transmission in a vehicle
Dispositif de commande d'embrayage pour transmission automatique dans un véhicule

(30) Priorität: 19.01.1996 DE 19601758
(43) Veröffentlichungstag der Anmeldung: 20.08.1997
(73) Patentinhaber: HYDRAULIK-RING ANTRIEBS- UND STEUERUNGSTECHNIK GmbH, D-72622 Nürtingen (DE)
(72) Erfinder: Trzmiel, Alfred, 72661 Grafenberg (DE)
(74) Vertreter: Kohl, Karl-Heinz

(56) Entgegenhaltungen:
- EP-A- 0 295 770
- DE-A- 4 445 606
- US-A- 4 636 679
- PATENT ABSTRACTS OF JAPAN vol. 012, no. 153 (E-607), 11.Mai 1988 & JP 62 268369 A (TOSHIBA CORP), 20.November 1987,

## Beschreibung

Die Erfindung betrifft eine Betätigungseinrichtung für eine Kupplung eines automatisierten Getriebes eines Fahrzeuges nach dem Oberbegriff des Anspruches 1.

Bei automatisierten Getriebesteuerungen ist eine Betätigungseinrichtung notwendig, um bei abgestelltem Fahrzeug die Kupplungstrennung vornehmen zu können. Als Betätigungseinrichtung dient ein Elektromotor mit einer Hydraulikpumpe. Die Betätigungseinrichtung ist über ein Zuschaltelement in Form eines Ventiles mit einem Kupplungszylinder verbunden. Die Betätigungseinrichtung ist aufwendig und teuer in der Herstellung und Montage und benötigt erheblichen Einbauraum.

Es ist ferner eine Betätigungseinrichtung für eine Bremse eines Fahrzeuges bekannt (EP-A-0 295 770), bei der zwei parallel zueinander liegende Piezopakete über ein Verbindungselement miteinander verbunden sind. Mit den Piezopaketen wird eine Bremsbacke in Richtung auf einen abzubremsenden Teil bewegt, der am Rand zwischen zwei Bremsbacken liegt.

Der Erfindung liegt die Aufgabe zugrunde, die gattungsgemäße Betätigungseinrichtung so auszubilden, daß sie preisgünstig in der Herstellung ist und nur wenig Einbauraum benötigt.

Diese Aufgabe wird bei der gattungsgemäßen Betätigungseinrichtung erfindungsgemäß mit den kennzeichnenden Merkmalen des Anspruches 1 gelöst.

Bei der erfindungsgemäßen Betätigungseinrichtung wird das Pumpelement durch den Kolbenschieber gebildet, der durch das Piezoelement betätigt wird. Der Kolbenschieber und das Piezoelement sind konstruktiv einfache Bauteile, die zudem preisgünstig in der Herstellung sind. Sie benötigen nur geringen Einbauraum, so daß die erfindungsgemäße Betätigungseinrichtung auch dort vorgesehen werden kann, wo nur wenig Einbauraum zur Verfügung steht. Da das Piezoelement mit einer hohen Frequenz arbeiten kann, kann der Kolbenschieber in der Zeiteinheit mit hoher Frequenz hin und her verschoben werden. Dadurch ist es möglich, innerhalb kürzester Zeit das zur Verstellung des Kupplungselementes notwendige Volumen bzw. notwendigen Druck im Medium aufzubauen. Über die Zuführung wird das Medium in den Aufnahmeraum angesaugt, wobei das zugehörige Rückschlagventil geöffnet wird. Wird der Kolbenschieber in der anderen Richtung verschoben, wird das im Aufnahmeraum befindliche Medium unter Druck gesetzt, wodurch das Rückschlagventil die Zuführung schließt und das andere Rückschlagventil den Zugang zum Kupplungselement freigibt. Mit der erfindungsgemäßen Betätigungseinrichtung kann auch bei ausgeschaltetem Motor des Fahrzeuges die Kupplungstrennung einfach vorgenommen werden. So ist es beispielsweise möglich, über den Schließzylinder eines Türkontaktes das Piezoelement zu erregen, und auf diese Weise den Kolbenschieber zu betätigen, um die Kupplungstrennung vorzunehmen. Bei Einsatz einer Wegrückführung und einer definierten Leckage in Form einer Blende kann mit der Betätigungseinrichtung auch die Kupplungsbetätigung eines automatisierten Schaltgetriebes während der Fahrt durchgeführt werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert.
- Fig. 1: in schematischer Darstellung und im Längsschnitt eine erfindungsgemäße Betätigungseinrichtung,
- Fig. 2 und Fig. 3: in Darstellungen entsprechend Fig. 1 unterschiedliche Arbeitsstellungen der Betätigungseinrichtung gemäß Fig. 1,
- Fig. 4 bis Fig. 6: unterschiedliche Anwendungen der Betätigungseinrichtung nach den Fig. 1 bis 3.

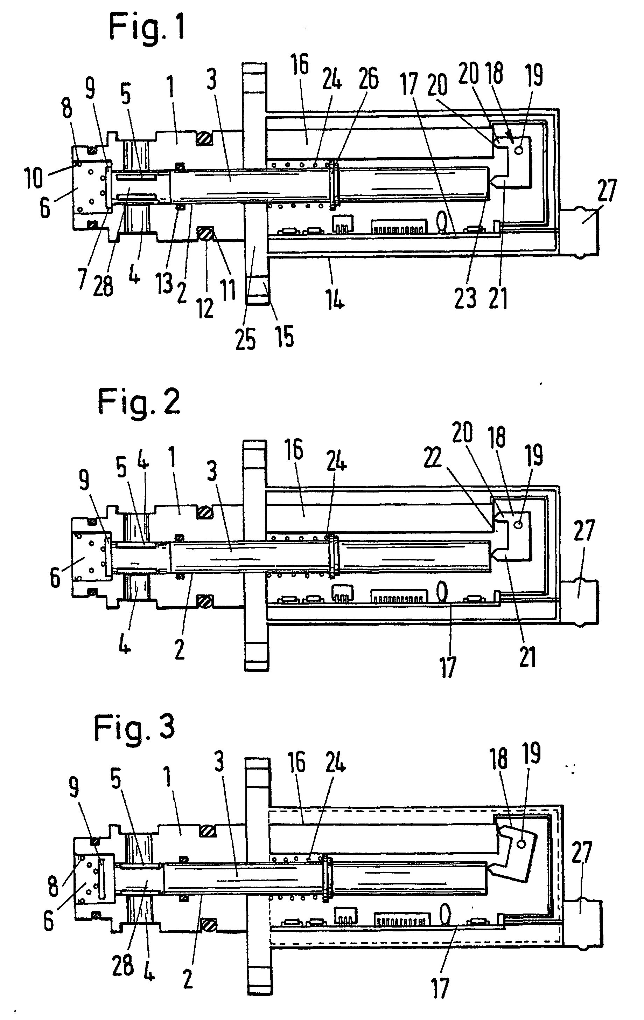

Die Einrichtung hat ein Gehäuse 1, das eine zentrale Bohrung 2 aufweist. In ihr ist ein Kolben 3 verschiebbar gelagert. In die Bohrung 2 mündet radial eine Zuführung für Druckmedium, vorzugsweise Hydraulikmedium. Die Zuführung 4 ist gegenüber der Bohrung 2 durch ein Rückschlagventil 5 verschließbar. Im dargestellten Ausführungsbeispiel ist das Rückschlagventil 5 hülsenförmig ausgebildet und wird durch ein flexibles Schlauchstück gebildet, das, wie Fig. 2 zeigt, in der Schließstellung über seinen Umfang dichtend an der Innenwandung der Bohrung 2 anliegt und die Zuführung 4 gegenüber der Bohrung 2 verschließt. Das Rückschlagventil 5 kann selbstverständlich jede andere geeignete Ausbildung haben, mit der eine hochfrequente Rückschlagfunktion erfüllt werden kann.

Die axiale Bohrung 2 mündet in eine stirnseitige Vertiefung 6 des Gehäuses 1. In einen Boden 7 der Vertiefung 6 mündet die Bohrung 2. In der Vertiefung 6 ist eine Druckfeder 8 eines Rückschlagventiles 9 untergebracht. Es hat einen plattenförmigen Schließteil, der unter der Kraft der Druckfeder 8 dichtend am Boden 7 der Vertiefung 6 anliegt und die Bohrung 2 gegenüber der Vertiefung 6 abdichtet. Die Druckfeder 8 ist in der Vertiefung 6 durch einen Anschlag 10, vorzugsweise durch Verstemmen, Verbördeln und dgl., gesichert.

Das Gehäuse 1 ist außenseitig mit einer umlaufenden Vertiefung 11 zur Aufnahme einer Ringdichtung 12 versehen. Die Einrichtung wird mit dem Gehäuse 1 in einen Einbauraum eines (nicht dargestellten) Aggregates eingesetzt, wobei die Ringdichtung 12 dichtend an der Innenwandung des Einbauraumes anliegt. Die Zuführung 4 schließt an eine Zuleitung des Aggregates an, während die Vertiefung 6 in der Einbaulage mit einem Versorgungsraum des Aggregates verbunden ist.

In die Innenwandung der Bohrung 2 ist mindestens eine Ringdichtung 13 zur Abdichtung des Kolbens 3 eingesetzt. Der Kolben 3 ragt in einen Gehäuseteil 14, der mit einem Flansch 15 an das Gehäuse 1 anschließt. Die Pumpvorrichtung wird so weit in den Einbauraum des Aggregates eingesetzt, bis der Flansch 15, der radial über das Gehäuse 1 und den Gehäuseteil 14 vorsteht, an einer Begrenzungswand des Aggregates zur Anlage kommt.

Im Gehäuseteil 14 ist mindestens ein Betätigungselement 16 untergebracht, das durch wenigstens ein Piezoelement gebildet wird. Es ist länglich ausgebildet und an eine Betätigungselektronik 17 angeschlossen, die im Gehäuseteil 14 angeordnet ist. Das Piezoelement 16 liegt parallel zum Kolben 3, der sich bis in den Gehäuseteil 14 erstreckt. Die Bewegung des Piezoelementes 16 wird über eine Übersetzung 18 auf den Kolben 3 übertragen. Die Übersetzung 18 ist als Hebel ausgebildet, der um eine senkrecht zum Piezoelement 16 und zum Kolben 3 liegende Achse 19 schwenkbar ist. Der Hebel 18 hat zwei parallel zueinander liegende Arme 20 und 21, die sich senkrecht zur Schwenkachse 19 erstrecken und an den Stirnseiten 22 und 23 des Piezoelementes 16 und des Kolbens 3 anliegen. Durch Schwenken des Hebels 18 um die Achse 19 wird der Kolben 3 in der entsprechenden Richtung verschoben.

Der Kolben 3 kann in Richtung auf den Hebel 18 durch mindestens eine Druckfeder 24 belastet sein, die sich mit ihrem einen Ende an einer in Höhe des Flansches 15 liegenden Stirnwand 25 des Gehäuseteiles 14 und mit ihrem anderen Ende an einem Bund 26 des Kolbens 3 abstützt. Wird der Hebel 18 im Uhrzeigersinn um die Achse 19 geschwenkt (Fig. 3), wird der Kolben 3 durch den Arm 21 des Hebels 18 gegen die Kraft der Druckfeder 24 verschoben. Der Kolben 3 liegt stets unter der Kraft der Druckfeder 24 am Arm 21 des Hebels 18 an. Wird das Piezoelement 16 nicht erregt, dann wird der Hebel 18 entgegen dem Uhrzeigersinn um die Achse 19 durch die Kraft der Druckfeder 24 zurückgeschwenkt.

Die Arme 20, 21 des Hebels 18 sind schneidenförmig ausgebildet, so daß der Schwenkvorgang des Hebels 18 die Verschiebbarkeit des Kolbens 3 nicht beeinträchtigt. Auf der Außenseite des Gehäuseteiles 14 ist ein Anschluß 27 vorgesehen, mit dem die Teile der Betätigungselektronik 17 mit Strom versorgt werden können. Die Betätigungselektronik 17 enthält einen Spannungsverstärker sowie eine Regelelektronik.

In der Ausgangsstellung gemäß Fig. 2 ist das Piezoelement 16 nicht erregt, so daß der Kolben 3 seine zurückgezogene Stellung einnimmt. Der Kolben 3 liegt unter der Kraft der Druckfeder 24 am Arm 21 des Übersetzungshebels 18 an, der mit seinem anderen Arm 20 an der Stirnseite 22 des Piezoelementes 16 anliegt. Die beiden Rückschlagventile 5 und 9 sind geschlossen, so daß die den Kolben 3 aufnehmende Bohrung 2 von der radialen Zuführung 3 und der Vertiefung 6 getrennt ist.

Wird in der Grundstellung des Kolbens 3 gemäß Fig. 2 das Piezoelement 16 so erregt, daß es sich verkürzt, so wird der Übersetzungshebel 18 entgegen dem Uhrzeigersinn um die Achse 19 geschwenkt. Dabei wird der Kolben 3 unter der Kraft der Druckfeder 24 in den Figuren nach rechts verschoben. Dadurch entsteht im Raum 28 vor dem Kolben 3 ein Unterdruck, wodurch das Rückschlagventil 5 geöffnet wird. Das Rückschlagventil 9 bleibt in seiner Schließstellung. Über die Zuführung 4 wird nunmehr das Druckmedium in den Raum 28 gesaugt.

Verlängert sich das Piezoelement 16 durch entsprechende Beaufschlagung, dann wird der Übersetzungshebel 18 aus der Lage gemäß Fig. 1 innerhalb kürzester Zeit um die Achse 19 im Uhrzeigersinn geschwenkt. Dadurch wird der Kolben 3 gegen die Kraft der Druckfeder 24 in den Figuren nach links verschoben (Fig. 3), wobei das Druckmedium im Raum 28 verdichtet wird. Das Rückschlagventil 5 wird infolge des Druckaufbaus geschlossen, so daß die Bohrung 2 von der Zuführung 4 getrennt wird. Sobald der Druck im Raum 28 größer wird als die auf das Rückschlagventil 9 wirkende Kraft der Druckfeder 8 sowie der im Raum 6 wirkende Systemdruck, wird das Rückschlagventil 9 geöffnet, so daß das unter Druck stehende Medium über die Vertiefung 6 zum Versorgungsraum des (nicht dargestellten) Aggregates strömen kann.

Durch die beschriebene Verkürzung und Verlängerung des Piezoelementes 16 wird der Kolben 3 in der beschriebenen Weise in der Bohrung 2 hin- und hergeschoben. Wenn sich das Piezoelement 16 verlängert, bewegt sich der Kolben 3 in Richtung auf die Vertiefung 6, wodurch das Druckmedium im Raum 28 verdichtet wird. Sobald der Druck im Druckmedium größer wird als die auf das Rückschlagventil 9 wirkende Kraft der Druckfeder 8, öffnet das Rückschlagventil 9. Das Druckmedium wird dann durch den Kolben 3 in der beschriebenen Weise in den Versorgungsraum verschoben bzw. es wird der Druck im Versorgungsraum erhöht. Zieht sich das Piezoelement 16 zusammen, wird der Kolben 3 in der beschriebenen Weise zurückgezogen, wodurch das Druckmedium über die Zuführung 4 in den Raum 28 angesaugt wird.

Das Piezoelement 16 kann je nach angelegter Frequenz mehrere tausend mal pro Sekunde die Verkürzung und Verlängerung durchführen bzw. eine genau vorgegebene Hubzahl abarbeiten. Dadurch läßt sich mit einem theoretisch inkompressiblen Medium ein definierter Volumenstrom einstellen bzw. ein definierter Druck im Aggregat erreichen.

Das Piezoelement 16 kann je nach gewünschtem geometrischem Hubvolumen auch ohne den Übersetzungshebel 18 unmittelbar auf den Kolben 3 einwirken. In diesem Fall ist das Piezoelement 16 vorteilhaft axial hinter dem Kolben 3 angeordnet, so daß er beim Verlängern bzw. Verkürzen des Piezoelementes 16 unmittelbar von ihm entsprechend verschoben wird. Ein der Betätigungseinrichtung nachgeschaltetes System kann beispielsweise im Regelkreis betrieben werden und im Millisekundenbereich einen bestimmten Druck aufbauen und beispielsweise einen Kolben gegen eine Federkraft in eine bestimmte Position verstellen.

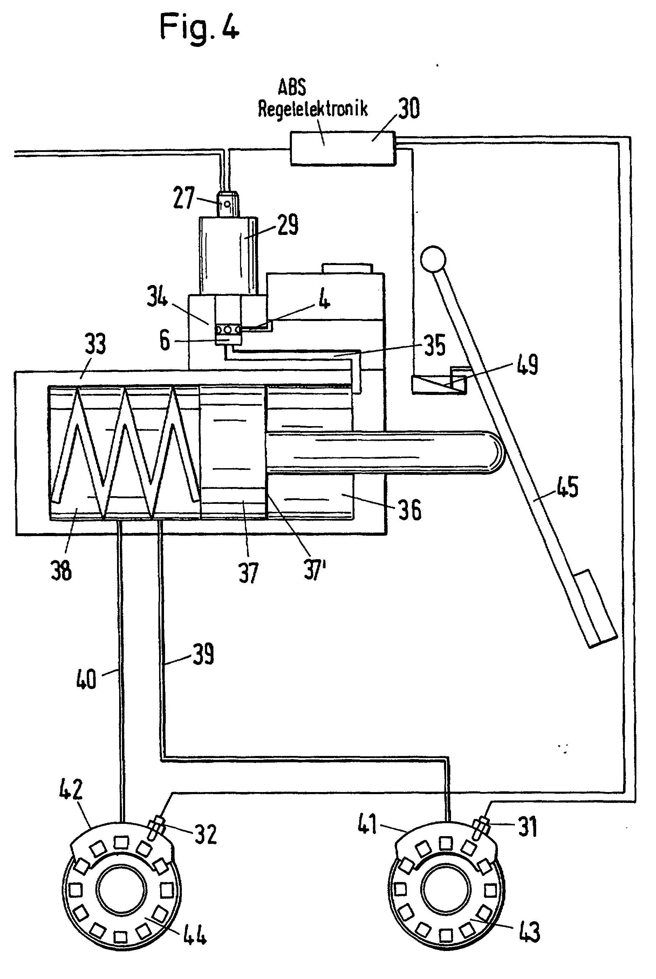

Anhand der Fig. 4 wird ein Anwendungsfall der Betätigungseinrichtung gemäß den Fig. 1 bis 3 näher erläutert. Die Betätigungseinrichtung, die als Piezopumpe ausgebildet ist, wird beim Ausführungsbeispiel nach Fig. 4 als Bremskraftverstärker eingesetzt. Ein ABS-System hat eine Regelelektronik 30, die an den Anschluß 27 der Betätigungseinrichtung 29 angeschlossen ist. An die Regelelektronik 30 sind in bekannter Weise Radsensoren 31 und 32 angeschlossen. Mit ihnen wird die Drehgeschwindigkeit der Räder überwacht und geregelt. Die Betätigungseinrichtung 29 ist unmittelbar an einen Hauptbremszylinder 33 angeschlossen. Er ist in Fig. 4 schematisch dargestellt. Die Zuführung 4 der Betätigungseinrichtung 29 ist mit einem Bremsflüssigkeitsbehälter 34 verbunden. Der Raum 6 der Betätigungseinrichtung 29 ist mit einer Leitung 35 verbunden, über welche die Bremsflüssigkeit in einen Zylinderraum 36 des Hauptbremszylinders 33 gepumpt werden kann. Ein Kolben 37 des Hauptbremszylinders 33 trennt den Zylinderraum 36 von einem weiteren Zylinderraum 38, in den Bremsleitungen 39 und 40 münden. Sie sind an Bremsen 41 und 42 angeschlossen, die mit Bremsscheiben 43, 44 des jeweiligen Rades eines Fahrzeuges in bekannter Weise zusammenwirken. Der Kolben 37 wird über ein Bremspedal 45 betätigt. Beim Niedertreten des Bremspedals 45 wird der Kolben 37 gegen eine Gegenkraft in bekannter Weise verschoben. Außerdem wird über ein Bremspotentiometer 49 beim Niedertreten des Bremspedales 45 die Regelelektronik 30 betätigt. Über sie wird die Betätigungseinrichtung 29 angesteuert, wodurch in der beschriebenen Weise im Raum 6 ein Druck aufgebaut wird. Über die Leitung 35 gelangt die unter Druck stehende Bremsflüssigkeit in den Zylinderraum 36 und wirkt auf die Kolbenringfläche 37'. Dadurch wird beim Verschieben des Kolbens 37 in den Bremsleitungen 39, 40 der erforderliche Bremsdruck aufgebracht. Die Stromversorgung der Betätigungseinrichtung 39 ist an den Anschluß 27 der Betätigungseinrichtung 29 angeschlossen.

Die Funktionsweise des ABS-Systems ist bekannt und wird darum nur kurz erläutert. Bei einer geregelten Vollbremsung des Fahrzeuges mit dem ABS-System wird der Bremsdruck bei konstanter Bremspedalkraft automatisch so beeinflußt, daß die Räder des Fahrzeuges nicht blockieren. Die Sensoren 31, 32 messen die jeweilige Drehgeschwindigkeit der Bremsscheiben 43, 44 und damit der Räder des Fahrzeuges. Wird von den Sensoren 31, 32 eine zu starke Radverzögerung gemeldet, so wird der Bremsdruck dieses entsprechenden Rades zunächst nicht weiter gesteigert, der Druck vielmehr auf dem bis dahin erreichten Wert gehalten. Verzögert sich die Drehbewegung dennoch weiter, so wird der Druck im Hauptbremszylinderraum 36 gesenkt und das Rad dadurch weniger stark abgebremst. Der Druckabbau im Hauptbremszylinderraum 36 kommt dadurch zustande, daß das Piezoelement 16 der Betätigungseinrichtung 29 seine Hubfrequenz verringert. Sollte dies nicht ausreichen, kann das Piezoelement 16 auch ganz abgeschaltet werden. Die Bremsflüssigkeit kann dann aus dem Zylinderraum 36 und die Leitung 35 über wenigstens eine beispielsweise am Rückschlagventil 9 vorgesehene Blende (Drossel) in die Leitung 4 zurückströmen. Die Blende (Drossel) ist vorzugsweise eine Einkerbung in der Auflagefläche des Rückschlagventilplättchens 9. Somit nimmt die Drehbewegung des Rades wieder zu. Die Sensoren 31, 32 senden weiterhin entsprechende Signale an die Regelelektronik 30. Beim Erreichen eines bestimmten Grenzwertes der Drehgeschwindigkeit des Rades erkennt die Regelelektronik 30, daß das Rad zu wenig gebremst wird. Darum wird der Bremsdruck wieder erhöht, wodurch die Drehbewegung des Rades verzögert wird.

Beim Ausführungsbeispiel nach Fig. 4 sind zwei Räder an einen gemeinsamen Hauptbremszylinder 33 angeschlossen, so daß die beiden Räder des Fahrzeuges gemeinsam hinsichtlich ihrer Drehgeschwindigkeit überwacht und geregelt werden. Da das Piezoelement 16 der Betätigüngseinrichtung 29 je nach angelegter Frequenz mehrere tausend mal pro Sekunde sich verlängern und zusammenziehen kann, kann im ABS-System im Millisekundenbereich der erforderliche Druck aufgebaut werden. Auf diese Weise kann bei der Drehzahlregelung über die Radsensoren 31, 32 ein definierter Schlupf der Räder realisiert werden, was zu einem idealen ABS-System führt. Das Piezoelement 16 der Betätigungseinrichtung 29 wird von der Regelelektronik 30 angesteuert, so daß eine hochgenaue und vor allen Dingen schnelle Regelung beim Abbremsen gewährleistet ist.

Da die als Piezopumpe wirkende Betätigungseinrichtung 29 gleichzeitig als Regel- bzw. Steuerelement eingesetzt werden kann, kann das ABS-System direkt am Hauptbremszylinder 33 angeordnet werden. Die Betätigungseinrichtung 29 hat nur einen geringen Platzbedarf und nur ein sehr geringes Gewicht. Hinzu kommt eine äußerst kostengünstige Herstellung der Betätigungseinrichtung 29. Infolge der hohen möglichen Betätigungsfrequenz des Piezoelementes 16 ist eine optimale Regelung der Bremskraft möglich. Insbesondere läßt sich wegen dieser hohen Betätigungsfrequenz eine konstante Haftreibung an den Rädern einstellen, wodurch eine maximale Bremswirkung erzielt wird.

Es ist selbstverständlich möglich, für jedes Rad eines Fahrzeuges eine eigene Betätigungseinrichtung 29 zu verwenden, wobei diese verschiedenen Betätigungseinrichtungen 29 individuell regel- und steuerbar sind. In diesem Falle sitzt in jeder Bremsleitung eine Betätigungseinrichtung 29.

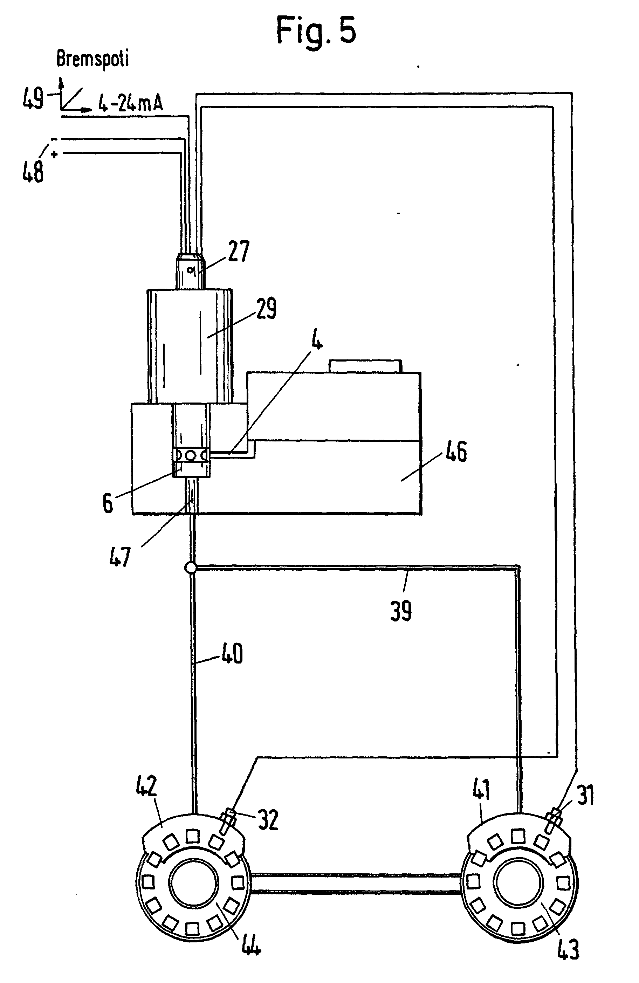

Bei der Ausführungsform nach Fig. 5 sind die Bremsleitungen 39, 40 an eine Leitung 47 angeschlossen, die mit dem Raum 6 der Betätigungseinrichtung 29 verbunden ist. Die Betätigungseinrichtung 29 ist entsprechend der Ausführungsform nach den Fig. 1 bis 3 ausgebildet. Über die Zuleitung 4 der Betätigungseinrichtung 29 wird die Bremsflüssigkeit aus einem Bremsflüssigkeitsbehälter 46 angesaugt. Die beiden Radsensoren 31, 32 sind unmittelbar an den Anschluß 27 der Betätigungseinrichtung 29 angeschlossen. Über diesen Anschluß 27 ist die Betätigungseinrichtung 29 außerdem mit der Stromversorgung 48 und mit dem Bremspotentiometer 49 verbunden, das entsprechend dem Ausführungsbeispiel gemäß Fig. 4 an eine Regelelektronik eines ABS-Systems angeschlossen sein kann. Wird das Bremspedal 45 (Fig. 4) betätigt, wird über das Bremspotentiometer 49 ein entsprechendes Signal an die Betätigungseinrichtung 29 gesandt. Das Piezoelement 16 wird dadurch betätigt. Wie anhand der Fig. 1 bis 3 beschrieben worden ist, bewegt sich dadurch der Kolben 3 mit hoher Frequenz hin und her und saugt Bremsflüssigkeit über die Zuführung 4 an und drückt sie über die Leitung 47 in die Bremsleitungen 39, 40. Die Radsensoren 31, 32 überwachen wiederum die Drehgeschwindigkeit der Bremsscheiben 43, 44 und damit der Räder des Fahrzeuges. Sobald die Drehgeschwindigkeit einen vorgegebenen Wert unterschreitet und somit die Gefahr besteht, daß das entsprechende Rad blockiert, wird der Bremsdruck zunächst, wie anhand des Ausführungsbeispieles gemäß Fig. 4 beschrieben worden ist, auf seinem augenblicklichen Wert gehalten. Nimmt die Drehgeschwindigkeit des jeweiligen Rades wieder zu und überschreitet sie einen vorgegebenen oberen Wert, wird der Bremsdruck in den Leitungen 39, 40 wieder erhöht, so daß das Rad erneut gebremst wird. Auf diese Weise kann das Fahrzeug ohne die Gefahr des Blockierens einwandfrei gebremst werden. Die Betätigungselektronik 17 der Betätigungseinrichtung 29 ist so aufgebaut, daß sie eine ABS-Regelung erlaubt. In Verbindung mit dem Piezoelement 16 ist somit eine einfache und dennoch hochgenaue Regelung des Abbremsvorganges eines Fahrzeuges möglich. Wie beim Ausführungsbeispiel nach Fig. 4 kann für jedes abzubremsende Rad eine eigene Betätigungseinrichtung 29 vorgesehen sein. Es ist lediglich erforderlich, die Radsensoren 31, 32 an den Anschluß 27 der Betätigungseinrichtung 29 anzuschließen. Das Piezoelement 16 wird dann in der beschriebenen Weise so angesteuert, daß der Druck in den Bremsleitungen 39, 40 entweder konstant gehalten, verringert oder erhöht wird. Aufgrund der sehr geringen Ansprechzeiten des Piezoelementes 16 ist diese Regelung sehr genau.

Die Betätigungseinrichtung 29 und der Bremsflüssigkeitsbehälter 46 können unmittelbar am Radbremszylinder jedes Rades angeordnet sein. Dadurch kann die Bremsanlage lediglich durch ein elektrisches Signal betätigt werden (brake by wire). Dadurch werden die Signallaufzeiten deutlich verringert, und es kann ein stabiles, hochdynamisches System erstellt werden. In diesem Fall ist es ohne weiteres möglich, die Betätigungseinrichtung 29 als Bremssystem mit ABS-Funktion für Anhänger einzusetzen. So kann für die Räder des Anhängers eine zentrale Betätigungseinrichtung 29 vorgesehen sein. Es ist aber auch möglich, für jedes Rad an den Radbremszylindern jeweils eine Betätigungseinrichtung 29 vorzusehen, so daß jedes Rad einzeln geregelt werden kann.

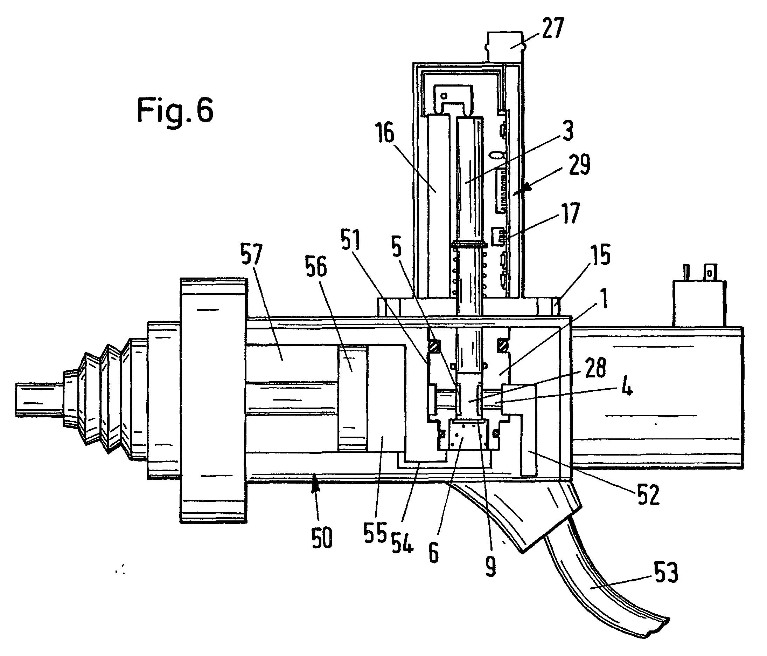

In Fig. 6 ist ein weiterer Einsatzfall der Betätigungseinrichtung 29 dargestellt. Sie dient in diesem Fall als Nothilfspumpe für einen Kupplungsstellzylinder 50. Die Betätigungseinrichtung 29 ist unmittelbar an den Kupplungsstellzylinder 50 mit dem Flansch 15 angeschlossen. Das Gehäuse 1 der Betätigungseinrichtung 29 ragt in einen Einbauraum 51 des Kupplungsstellzylinders 50. An die Zuführung 4 der Betätigungseinrichtung 29 ist eine Leitung 52 angeschlossen, über welche Hydraulikmedium angesaugt werden kann. Das Hydraulikmedium wird über eine Anschlußleitung 53 des Kupplungsstellzylinders 50 beim Betrieb des Piezoelementes 16 in der anhand der Fig. 1 bis 3 beschriebenen Weise angesaugt.

An die Vertiefung 6 der Betätigungseinrichtung 29 ist eine im Kupplungsstellzylinder 50 vorgesehene Leitung 54 angeschlossen, welche die Vertiefung 6 mit einem Zylinderraum 55 verbindet. Er ist durch einen Kolben 56 von einem weiteren Zylinderraum 57 getrennt.

Wird das Piezoelement 16 in der beschriebenen Weise betätigt, wird der Kolben 3 der Betätigungseinrichtung 29 hin- und herbewegt. Wird der Kolben 3 in der Darstellung gemäß Fig. 6 nach oben bewegt, wird Hydraulikmedium über die Leitung 52 in den Raum 28 angesaugt, wobei das Rückschlagventil 5 geöffnet ist. Wird anschließend der Kolben 3 in Fig. 6 nach unten verschoben,' wird das im Raum 28 befindliche Hydraulikmedium verdichtet und das Rückschlagventil 5 geschlossen. Bei entsprechendem Druck wird das Rückschlagventil 9 geöffnet, so daß das Hydraulikmedium über die Vertiefung 6 und die Leitung 54 in den Zylinderraum 55 gelangen kann. Unter dem Hydraulikdruck wird der Kolben 56 verschoben und auf diese Weise die (nicht dargestellte) Kupplungsvorrichtung betätigt.

Mit der Betätigungseinrichtung 29 läßt sich bei einem automatisierten Schaltgetriebe eine Notausrückung des Kupplungszylinders während des ausgeschalteten Motors beispielsweise über einen Türkontakt aktivieren und die Kupplungstrennung durchführen. Dadurch ist gewährleistet, daß die Kupplung vor dem Startvorgang auf jeden Fall getrennt ist. Über den Türkontakt, der an den Anschluß 27 der Betätigungseinrichtung 29 angeschlossen ist, wird das Piezoelement 16 entsprechend betätigt. Das Piezoelement 16 ist in der Lage, beispielsweise bis zu 1.000 Hübe pro Sekunde durchzuführen, so daß sehr schnell ein zur Verstellung der Kupplungselemente benötigtes Volumen bzw. ein entsprechend benötigter Druck aufgebaut werden kann.

Mit der Betätigungseinrichtung 29 ist es auch möglich, eine Kupplungsbetätigung des automatisierten Schaltgetriebes durchzuführen. Die Betätigungselektronik 17 der Betätigungseinrichtung 29 kann so ausgebildet sein, daß mit ihr ein Regelkreis aufgebaut werden kann, der über eine Wegmessung geschlossen wird. Mit dem Regelkreis ist eine Kupplungsbetätigung für ein ruckfreies, geregeltes Anfahren mit der Kupplung möglich. Die Betätigungselektronik 17 ist im Gehäuse 1, 14 der Betätigungseinrichtung 29 gekapselt, so daß die für die Betätigung des Piezoelementes 16 notwendige hohe Spannung zu keinen Problemen führen kann. Da die Regelelektronik in der Betätigungselektronik 17 enthalten ist, muß die Betätigungseinrichtung 29 nur mit dem notwendigen Strom und der erforderlichen Stellgröße beaufschlagt werden. Die Betätigungseinrichtung 29 ist konstruktiv einfach ausgebildet. Bei Verwendung zur Aktivierung der Kupplungsfunktion bei einem automatisierten Handschaltgetriebe sind keine zusätzlichen Schaltelemente notwendig, auch nicht um eine Kupplungsposition vorzugeben.

Die Betätigungseinrichtung 29 kann aufgrund ihrer beschriebenen Pumpwirkung übeall dort eingesetzt werden, wo Pumpen erforderlich sind. Mögliche Einsatzgebiete der Betätigungseinrichtung 29 sind darum u.a. auch eine Lenkhilfepumpe, eine Schmiermittelpumpe und dergleichen. Ein weiteres Einsatzgebiet der Betätigungseinrichtung 29 ist die Verwendung als Einspritzvorrichtung für Kraftstoff bei Kraftfahrzeugen. Das Piezoelement 16 kann über eine frequenzabhängige Steuerung so betätigt werden, daß eine genau vorgegebene Kraftstoffmenge zu einem vorgegebenen Zeitpunkt zur Verfügung gestellt wird. Da das Piezoelement 16 mit hoher Frequenz arbeitet, ist die Betätigungseinrichtung 29 hervorragend für den Einspritzvorgang geeignet. Der Kraftstoff wird über die Zuführung 4 beim Zurückschieben des Kolbens 3 angesaugt und beim Vorschieben über das geöffnete Rückschlagventil 9 herausgedrückt. Der Durchmesser des Kolbens 3 kann für diesen Fall sehr klein gehalten werden. Durch entsprechende Ausbildung des Übersetzungshebels 18 kann der relativ kleine Hub des Piezoelementes 16 in erforderlichem Maße verstärkt werden, um den Förderstrom bzw. die Druckerhöhung eines vorverdichteten Mediums pro Hub genau einstellen zu können.

## Patentansprüche

1. Betätigungseinrichtung für eine Kupplung eines automatisierten Getriebes eines Fahrzeuges, mit mindestens einem Pumpelement (3), mit dem Medium zu einem Kupplungselement förderbar ist,
**dadurch gekennzeichnet, daß** das Pumpelement ein Kolbenschieber (3) ist, der durch wenigstens ein Piezoelement (16) verschiebbar ist, das über eine Übersetzung (18) mit dem Kolbenschieber (3) verbunden ist, vor dem sich ein in einem Gehäuse (1, 14) untergebrachter Aufnahmeraum (28) für das Medium befindet, in den wenigstens eine Zuführung (4) und eine zum Kupplungselement führende Leitung (6) für das Medium münden, die jeweils durch ein Rückschlagventil (5, 9) geschlossen sind.

2. Einrichtung nach Anspruch 1,
**dadurch gekennzeichnet, daß** die Übersetzung (18) ein schwenkbarer Hebel ist.

3. Einrichtung nach Anspruch 1 oder 2,
**dadurch gekennzeichnet, daß** die Übersetzung (18) zwei vorzugsweise zueinander parallele Arme (20, 21) aufweist, die an Stirnseiten (22, 23) des Piezoelementes (16) und des Kolbenschiebers (3) anliegen.

4. Einrichtung nach einem der Ansprüche 1 bis 3,
**dadurch gekennzeichnet, daß** das Piezoelement (16) und der Kolbenschieber (3) parallel zueinander liegen.

5. Einrichtung nach einem der Ansprüche 2 bis 4,
**dadurch gekennzeichnet, daß** die Schwenkachse (19) des Hebels (18) in einem die Arme (20, 21) verbindenden Steg vorgesehen ist und vorzugsweise senkrecht zur Verschieberichtung des Kolbenschiebers (3) liegt.

6. Einrichtung nach einem der Ansprüche 1 bis 5,
**dadurch gekennzeichnet, daß** das Piezoelement (16) den Kolbenschieber (3) gegen eine Gegenkraft verschiebt.

7. Einrichtung nach einem der Ansprüche 1 bis 6,
**dadurch gekennzeichnet, daß** mit dem Kolbenschieber (3) aus der Zuführung (4) das Medium ansaugbar ist.

8. Einrichtung nach einem der Ansprüche 1 bis 7,
**dadurch gekennzeichnet, daß** das Rückschlagventil (5) der Zuführung (4) ein radial elastisch verformbares Hülsenstück ist, das unter einer beim Zurückschieben des Kolbenschiebers (3) entstehenden Saugkraft die Zuführung (4) in Richtung auf den vorzugsweise gegen das Kupplungselement durch das Rückschlagventil (9) der Leitung (6) verschließbaren Aufnahmeraum (28) öffnet, und daß vorzugsweise das Rückschlagventil (9) der Leitung (6) unter einer beim Vorschieben des Kolbenschiebers (3) entstehenden Druckkraft in Richtung auf das Kupplungselement öffnet.

9. Einrichtung nach einem der Ansprüche 1 bis 8,
**dadurch gekennzeichnet, daß** das Druckmedium über das Rückschlagventil (9) der Leitung (6) in einen Zylinderraum (55) eines Kupplungsstellzylinders (50) förderbar ist, der vorzugsweise durch einen Kolben (56) begrenzt ist, der mit dem Kupplungselement verbunden ist.

10. Einrichtung nach einem der Ansprüche 1 bis 9,
**dadurch gekennzeichnet, daß** das Piezoelement (16) und der Kolbenschieber (3) Teil einer Einbaueinheit sind, die vorteilhaft in den Kupplungsstellzylinder (15) zumindest teilweise integriert ist, und daß vorzugsweise die Einbaueinheit das Gehäuse (1, 14) aufweist, in dem das Piezoelement (16) und der Kolbenschieber (3) untergebracht sind.

11. Einrichtung nach einem der Ansprüche 1 bis 10,
**dadurch gekennzeichnet, daß** im Gehäuse (1, 14) eine Betätigungselektronik (17) für das Piezoelement (16) untergebracht ist, und daß vorzugsweise am Gehäuse (1, 14) ein elektrischer Anschluß (27) vorgesehen ist und das Gehäuse (1, 14) einen Montageflansch (15) aufweist.

12. Einrichtung nach Ansprüch 11,
**dadurch gekennzeichnet, daß** das Piezoelement (16) und die Betätigungselektronik (17) auf einander gegenüberliegenden Seiten des Kolbenschiebers (3) im Gehäuse (1, 14) angeordnet sind.

## Claims

1. An actuating device for a clutch of an automatic gearbox in a vehicle, having at least one pump element (3) by means of which a medium may be conveyed to a clutch element, **characterised in that** the pump element is a piston valve (3) which may be displaced by at least one piezoelement (16) connected to the piston valve (3) by way of a transmission (18), upstream of which piston valve there is a receiving chamber (28) which is accommodated in a housing (1, 14) and into which there lead at least one supply means (4) and a line (6) for the medium which extends to the clutch element, the supply means and the line each being closed by a respective non-return valve (5, 9).

2. A device according to Claim 1, **characterised in that** the transmission (18) is a pivoted lever.

3. A device according to Claim 1 or 2, **characterised in that** the transmission (18) has two preferably mutually parallel arms (20, 21) which abut against end faces (22, 23) of the piezoelement (16) and the piston valve (3).

4. A device according to one of Claims 1 to 3, **characterised in that** the piezoelement (16) and the piston valve (3) are mutually parallel.

5. A device according to one of Claims 2 to 4, **characterised in that** the pivot axis (19) of the lever (18) is provided in a web connecting the arms (20, 21) and is preferably perpendicular to the direction of displacement of the piston valve (3).

6. A device according to one of Claims 1 to 5, **characterised in that** the piezoelement (16) displaces the piston valve (3) in opposition to a counter force.

7. A device according to one of Claims 1 to 6, **characterised in that** the medium may be drawn off from the supply means (4) by the piston valve (3).

8. A device according to one of Claims 1 to 7, **characterised in that** the non-return valve (5) of the supply means (4) is a resiliently radially deformable sleeve piece which, under a suction force produced upon the reverse displacement of the piston valve (3), opens the supply means (4) in the direction of the receiving chamber (28) which may preferably be closed with respect to the clutch element by the non-return valve (9) of the line (6), and **in that** the non-return valve (9) of the line (6) preferably opens in the direction of the clutch element under a pressure force produced upon the forward displacement of the piston valve (3).

9. A device according to one of Claims 1 to 8, **characterised in that**, by way of the non-return valve (9) of the line (6), the pressure medium may be conveyed into a cylindrical chamber (55) of a clutch control cylinder (50) which is preferably delimited by a piston (56) connected to the clutch element.

10. A device according to one of Claims 1 to 9, **characterised in that** the piezoelement (16) and the piston valve (3) are part of a built-in unit which is advantageously at least partially integrated in the clutch control cylinder, and **in that** the built-in unit preferably has the housing (1, 14) in which the piezoelement (16) and the piston valve (3) are accommodated.

11. A device according to one of Claims 1 to 10, **characterised in that** actuating electronics (17) for the piezoelement (16) are accommodated in the housing (1, 14), and **in that** an electrical connection (27) is preferably provided on the housing (1, 14) and the housing (1, 14) has an assembly flange (15).

12. A device according to Claim 11, **characterised in that** the piezoelement (16) and the actuating electronics (17) are arranged on mutually opposing sides of the piston valve (3) in the housing (1, 14).

## Revendications

1. Dispositif d'actionnement pour l'embrayage d'une transmission automatique d'un véhicule, comportant au moins un élément de pompage (3) au moyen duquel un fluide peut être convoyé vers un élément d'embrayage, **caractérisé en ce que** l'élément de pompage est un tiroir à piston (3) qui est déplaçable par au moins un élément piézo-électrique (16) qui est relié via une démultiplication (18) au tiroir à piston (3) en avant duquel se situe une chambre de réception (28) logée dans un boîtier (1, 14) et destinée au fluide, dans laquelle débouchent au moins une conduite d'amenée (4) et une conduite à fluide (6) menant à l'élément d'embrayage, lesquelles sont refermées chacune par un clapet anti-retour (5, 9).

2. Dispositif selon la revendication 1, **caractérisé en ce que** la démultiplication (18) est un levier en basculement.

3. Dispositif selon l'une ou l'autre des revendications 1 et 2, **caractérisé en ce que** la démultiplication (18) comprend deux bras (20, 21) de préférence parallèles l'un à l'autre, qui prennent appui contre les faces frontales (22, 23) de l'élément piézo-électrique (16) et du tiroir à piston (3).

4. Dispositif selon l'une quelconque des revendications 1 à 3, **caractérisé en ce que** l'élément piézo-électrique (16) et le tiroir à piston (3) sont disposés parallèlement l'un à l'autre.

5. Dispositif selon l'une quelconque des revendications 2 à 4, **caractérisé en ce que** l'axe de basculement (19) du levier (18) est prévu dans une barrette reliant les bras (20, 21) et est disposé de préférence perpendiculairement à la direction de déplacement du tiroir à piston (3).

6. Dispositif selon l'une quelconque des revendications 1 à 5, **caractérisé en ce que** l'élément piézo-électrique (16) déplace le tiroir à piston (3) à l'encontre d'une force antagoniste.

7. Dispositif selon l'une quelconque des revendications 1 à 6, **caractérisé en ce que** le fluide peut être aspiré au moyen du tiroir à piston (3) hors de la conduite d'amenée (4).

8. Dispositif selon l'une quelconque des revendications 1 à 7, **caractérisé en ce que** le clapet anti-retour (5) de la conduite d'amenée (4) est un tronçon en forme de douille radialement élastiquement déformable qui ouvre, sous une force d'aspiration engendrée pendant la rétraction du tiroir à piston (3), la conduite d'amenée (4) en direction de la chambre de réception (28) susceptible d'être refermée de préférence contre l'élément d'embrayage par le clapet anti-retour (9) de la conduite (6), et **en ce que** de préférence le clapet anti-retour (9) de la conduite (6) s'ouvre, sous une force de pression engendrée pendant le déploiement du tiroir à piston (3), en direction de l'élément d'embrayage.

9. Dispositif selon l'une quelconque des revendications 1 à 8, **caractérisé en ce que** le fluide sous pression peut être convoyé via le clapet anti-retour (9) de la conduite (6) dans une chambre (55) d'un cylindre de positionnement d'embrayage (50) qui est délimitée de préférence par un piston (56) qui est relié à l'élément d'embrayage.

10. Dispositif selon l'une quelconque des revendications 1 à 9, **caractérisé en ce que** l'élément piézo-électrique (16) et le tiroir à piston (3) font partie d'une unité structurelle qui est intégrée au moins en partie avantageusement dans le cylindre de positionnement d'embrayage (15), et **en ce que** de préférence l'unité structurelle comprend le boîtier (1, 14) dans lequel sont logés l'élément piézo-électrique (16) et le tiroir à piston (3).

11. Dispositif selon l'une quelconque des revendications 1 à 10, **caractérisé en ce que** dans le boîtier (1, 14) est logée une unité électronique d'actionnement (17) pour l'élément piézo-électrique (16), et **en ce qu'**une borne électrique (27) est prévue de préférence sur le boîtier (1, 14) et le boîtier (1, 14) comprend une bride de montage (15).

12. Dispositif selon la revendication 11, **caractérisé en ce que** l'élément piézo-électrique (16) et l'unité électronique d'actionnement (17) sont agencés sur des côtés mutuellement opposés du tiroir à piston (3) dans le boîtier (1, 14).
